# EUROPÄISCHE PATENTSCHRIFT

(11) **EP 3 009 474 B1**
(45) Veröffentlichungstag und Bekanntmachung des Hinweises auf die Patenterteilung: **13.09.2017**
(21) Anmeldenummer: 14189166.3
(22) Anmeldetag: 16.10.2014
(51) Int. Cl.: C08L 33/02, C08J 3/24, C08F 220/06, C08J 3/28, C08F 8/00

(54) **Herstellverfahren für wasserlösliche Polymere**
Method for the production of water soluble polymers
Procédé de fabrication pour polymères solubles dans l'eau

(43) Veröffentlichungstag der Anmeldung: 20.04.2016
(73) Patentinhaber: Evonik Degussa GmbH, 45128 Essen (DE)
(72) Erfinder: Van Stiphoudt, Manfred, 47906 Kempeng (DE); Klapperich, Udo, 53547 Leubsdorf/Rhein (DE); Malinowski, Theodor, 47669 Wachtendonk (DE)

(56) Entgegenhaltungen:
- WO-A1-02/22717
- WO-A1-2005/080479
- WO-A1-2014/041969
- WO-A2-2011/042468
- DE-A1- 19 630 131

## Beschreibung

Die vorliegende Erfindung liegt auf dem Gebiet der wasserabsorbierenden Polymerpartikel und Superabsorber. Sie betrifft insbesondere ein Verfahren zur Herstellung wasserabsorbierender Polymerpartikel. Sie betrifft weiterhin wasserabsorbierende Polymerpartikel sowie Hygieneartikel, beinhaltend wasserabsorbierende Polymerpartikel.

Superabsorber sind bekannt und ist die Bezeichnung für vernetzte hydrophile Polymere, die große Mengen wässriger Flüssigkeiten aufnehmen können. Diese Fähigkeit beruht auf der starken Wechselwirkung von Wasser mit hydrophilen Gruppen der Superabsorber, insbesondere ionischer Gruppen oder Gruppen, die zur Wasserstoff-Brückenbindung befähigt sind. Für Superabsorber sind u.a. auch Bezeichnungen wie "hochquellfähiges Polymer", "Hydrogel" (oft auch für die trockene Form verwendet), "Hydrogel bildendes Polymer", "Wasser absorbierendes Polymer", "absorbierendes gelbildendes Material", "quellfähiges Harz", "wasserabsorbierendes Harz" oder ähnliche gebräuchlich. Insbesondere handelt es sich um wasserabsorbierende Polymere auf Basis teilneutralisierter Acrylsäure. Die wesentlichen Eigenschaften von Superabsorbern sind ihre Fähigkeiten, ein Vielfaches ihres Eigengewichts an wässrigen Flüssigkeiten zu absorbieren (z. B. das 30-800-fache) und die Flüssigkeit auch unter gewissem Druck nicht wieder abzugeben. Der Superabsorber, der in Form eines trockenen Pulvers eingesetzt wird, wandelt sich bei Flüssigkeitsaufnahme in ein Gel, bei der üblichen Wasseraufnahme entsprechend in ein Hydrogel um. Die Vernetzung ist für synthetische Superabsorber wesentlich und führt zur Unlöslichkeit der Polymeren in Wasser. Lösliche Substanzen wären als Superabsorber nicht brauchbar. Das mit weitem Abstand wichtigste Einsatzgebiet von Superabsorbern ist das Absorbieren von Körperflüssigkeiten. Superabsorber werden beispielsweise in Windeln für Kleinkinder, Inkontinenzprodukten für Erwachsene oder Damenhygieneprodukten verwendet. Andere Anwendungsgebiete sind beispielsweise als Wasser zurückhaltende Mittel im landwirtschaftlichen Gartenbau, als Wasserspeicher zum Schutz vor Feuer, zur Flüssigkeitsabsorption in Lebensmittel- Verpackungen, als Kabelummantelungsmaterial für Tiefseekabel oder ganz allgemein zur Absorption von Feuchtigkeit.

Im Allgemeinen weist ein derartiger Superabsorber eine CRC ("Centrifuge Retention Capacity") von mindestens 5 g/g, vorzugsweise mindestens 10 g/g, in bevorzugter Form mindestens 20 g/g, insbesondere 30 g/g auf. Wichtig für einen Superabsorber ist nicht nur seine Absorptionskapazität, sondern auch die Fähigkeit, Flüssigkeit unter Druck zurückzuhalten (Retention, meist als "Absorption against Pressure" ("AAP") ausgedrückt) sowie die Permeabilität, also die Fähigkeit zur Flüssigkeitsweiterleitung im gequollenen Zustand. Gequollenes Gel kann die Flüssigkeitsweiterleitung zu noch nicht gequollenem Superabsorber behindern ("gel blocking"). Gute Weiterleitungseigenschaften für Flüssigkeiten besitzen beispielsweise Hydrogele, die im gequollenen Zustand eine hohe Gelfestigkeit aufweisen. Gele mit nur geringer Gelfestigkeit sind unter einem angewendetem Druck (Körperdruck) deformierbar, verstopfen Poren in einem Superabsorber / Cellulosefaser-Saugkörper und verhindern dadurch die Flüssigkeitsweiterleitung zu noch nicht oder nicht vollständig gequollenem Superabsorber und die Flüssigkeitsaufnahme durch diesen noch nicht oder nicht vollständig gequollenen Superabsorber. Eine erhöhte Gelfestigkeit wird in aller Regel durch einen höheren Vernetzungsgrad erreicht, wodurch allerdings die Absorptionskapazität des Produktes verringert wird. Eine effektive Methode zur Erhöhung der Gelfestigkeit stellt die Erhöhung des Vernetzungsgrads an der Oberfläche der Superabsorberpartikel gegenüber dem Inneren der Partikel dar. Dazu werden meist in einem Oberflächennachvernetzungsschritt getrocknete Superabsorberpartikel mit durchschnittlicher Vernetzungsdichte einer zusätzlichen Vernetzung in einer dünnen Oberflächenschicht ihrer Partikel unterworfen. Durch die Oberflächennachvernetzung steigt die Vernetzungsdichte in der Schale der Superabsorberpartikel, wodurch die Absorption unter Druckbelastung auf ein höheres Niveau gehoben wird. Während die Absorptionskapazität in der Oberflächenschicht der Superabsorberpartikel sinkt, weist ihr Kern durch das Vorhandensein beweglicher Polymerketten eine im Vergleich zur Schale verbesserte Absorptionskapazität auf, so dass durch den Schalenaufbau eine verbesserte Permeabilität gewährleistet wird, ohne dass gel blocking auftritt. Es ist ebenfalls bekannt, insgesamt höher vernetzte Superabsorber zu erzeugen und den Vernetzungsgrad im Inneren der Partikel gegenüber einer äußeren Schale der Partikel nachträglich zu verringern.

Die Herstellung von derartigen Superabsorbern (auch Superabsorber-Polymere genannt) basiert im Wesentlichen auf der Polymerisation von ethylenisch ungesättigten, säuregruppentragenden Monomeren, die wahlweise zumindest teilweise als Salz vorliegen, insbesondere auf der radikalischen Polymerisation von teilneutralisierter Acrylsäure, üblicherweise in Gegenwart von Vernetzern.

Während der Herstellung von derartigen Superabsorbern ist es erforderlich, dem Polymerisat Additive zuzuführen, wobei in der Regel auf flüssige Additivzubereitungen, insbesondere wässrige Additivlösungen zurückgegriffen wird. Dabei werden die flüssigen Additivzubereitungen, insbesondere Additivlösungen, üblicherweise mit Hilfe von Düsen durch Sprühen auf das Polymerisat gegeben, um eine besonders gute Verteilung zu erzielen. Hierbei treten oftmals Probleme auf, wie insbesondere Verstopfung der Düsen, so dass es zu Beeinträchtigungen der Produktqualität, aufwändigen Wartungsarbeiten bis hin zu Produktionsausfällen kommt. Deshalb wird z.B. mit beheizbaren Düsen usw. gearbeitet.

Die konkrete Aufgabe der vorliegenden Erfindung war es vor diesem Hintergrund, bei der Herstellung von wasserabsorbierenden Polymerpartikeln die Zugabeart von flüssigen Additivzubereitungen dahingehend zu verbessern, dass Beeinträchtigungen der Produktqualität bis hin zu Produktionsausfällen als Folge der Additivzugabe besser vermieden werden kann.

Entsprechende Verfahren wurden schon in den DE-A-19630131, WO-A-2005/80479 und WO-A_2011/42468 beschrieben. Überraschenderweise wurde gefunden, dass diese Aufgabe vom Gegenstand der Erfindung gelöst wird, nämlich einem Verfahren entsprechend dem Anspruch 1 zur, Herstellung wasserabsorbierender Polymere, wobei ein Grundpolymer A mit einer flüssigen Additivzubereitung B, insbesondere wässrigen Additivlösung B, in einer Mischvorrichtung in Kontakt gebracht und vermischt wird, wobei das Grundpolymer A auf Basis zu mindestens 30%, vorzugsweise zu mindestens 40% neutralisierter Säuregruppen tragender Monomere hergestellt wird und die flüssige Additivzubereitung B, insbesondere wässrige Additivlösung B, über ein Rohr ohne Düse in die Mischvorrichtung dosiert wird.

Dieses Verfahren ermöglicht eine im Wesentlichen störungsfreie und wartungsfreie Zugabe von flüssigen Additivzubereitungen bei der Herstellung von wasserabsorbierenden Polymerpartikeln. Überraschenderweise wird die Produktqualität trotz des Verzichtes auf die Nutzung von Düsen zum Versprühen der flüssigen Additivzubereitungen nicht beeinträchtigt. Produktionsausfälle können vermieden werden.

Weitere Vorteile der Erfindung sind, dass insgesamt der Wartungsaufwand sehr deutlich reduziert werden kann, da z.B. viel weniger Anbackungen entstehen und somit der Reinigungsaufwand erheblich geringer ist. Auch wird eine Verweilzeitreduzierung im Mischer ermöglicht. Eine Aerosolbildung wird vermieden. Mischer können effizienter genutzt werden. Aus all dem resultiert eine deutliche Minderung der Produktionskosten.

Die Erfindung erlaubt den einfachen und problemlosen Einsatz auch inkompatibler oder nicht miteinander mischbarer Flüssigkeiten. Dadurch wird eine mögliche Dekomposition der flüssigen Additivzubereitung B verhindert, da diese erst im Prozess selbst entsteht und sofort weiter verarbeitet wird. Die Erfindung erlaubt den einfachen und problemlosen Einsatz sehr konzentrierter Flüssigkeiten, die einen hohen Additivgehalt aufweisen. Das hat den Vorteil, dass im weiteren Verlauf weniger Wasser oder Lösungsmittel abgezogen werden muss, wodurch Energiekosten gesenkt werden können.

Der Begriff der flüssigen Additivzubereitung B umfasst Flüssigkeiten im weitesten Sinne, insbesondere Lösungen, Emulsionen, Sole, Suspensionen, Aufschlämmungen. Die flüssigen Additivzubereitung B ist insbesondere eine wässrige Additivlösung.

Wenn im Folgenden der Begriff der wässrigen Additivlösung, insbesondere der wässrigen Additivlösung B, verwendet wird, ist damit jedwede flüssige Additivzubereitung umfasst, die zumindest 5 Gew.-% Wasser, bezogen auf ihr Gesamtgewicht enthält. Der Begriff der wässrigen Additivlösung umfasst im Sinne dieser Erfindung somit auch Emulsionen, Sole, Suspensionen sowie Aufschlämmungen. Im einfachsten Fall kann die flüssige Additivzubereitung B nur Wasser umfassen, insbesondere enthält sie neben Wasser aber zumindest 1 Additiv.

Der Begriff des Rohres ist an sich bekannt und bedarf keiner weiteren Erläuterungen. Ein Rohr ist bekanntermaßen ein länglicher Hohlkörper, dessen Länge in der Regel wesentlich größer als sein Durchmesser ist. Rohre können bekanntermaßen zum Transport von Flüssigkeiten genutzt werden. Rohre können aus den unterschiedlichsten Werkstoffen gefertigt werden, wie z. B. Stahl, Keramik oder Kunststoff und sind in der Regel nicht flexibel. Rostfreier Stahl ist besonders bevorzugt. Rohrverbindungen können geschraubt, weich- oder hartgelötet, geschweißt, geklebt, per Dichtung ineinander geschoben, per Spannring geklemmt, nur gesteckt oder gepresst werden. Verbindungsmöglichkeiten sind Schweiß- und Lötnähte, Flansche, Muffen, Rohrverbindungselemente, Einwalzen, Spannringe, Formteile, Verschraubungen sowie vorgebogene Rohrstücke. Typische Formteile sind T-Stücke, Bögen 45°, 90° und 180°, sowie konzentrische und exzentrische Reduzierungen. All dies ist dem Fachmann bekannt und verfügbar.

Düsen sind dem Fachmann ebenfalls bekannt. Im Stand der Technik werden Additivlösungen auf Superabsorberteilchen grundsätzlich aufgesprüht. Dazu sind Düsen notwendig. Der Begriff der "Düse" umfasst im Sinne der Erfindung insbesondere jegliche Sprühdüsen und Zerstäubungssysteme, wie z.B. mono- und polydisperse Sprühsysteme, Einstoff-Druckdüsen (strahl- oder lamellenbildend), Rotationszerstäuber, Zweistoffzerstäuber, Ultraschallzerstäuber, Pralldüsen, Rundstrahl-, Flachstrahl-, Weitwinkel-Rundstrahl- Düsen, Schlitzdüsen, Vollkegeldüsen usw.

Mischvorrichtungen sind dem Fachmann ebenfalls bekannt. Im Stand der Technik werden zahlreiche Mischvorrichtungen genannt, die bei der Herstellung von Superabsorberteilchen eingesetzt werden können. Für die Zwecke dieser Erfindung sind die bekannten Mischvorrichtungen einsetzbar. Es kann z.B. auf Mischer mit bewegten Mischwerkzeugen, wie Schneckenmischer, Scheibenmischer und Schaufelmischer, zurückgegriffen werden. Besonders bevorzugt sind Horizontalmischer, wie Schaufelmischer. Ebenfalls bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar® Mischer (Gebr. Lödige Maschinenbau GmbH;

Paderborn; DE), Vrieco-Nauta Continuous Mixer (Hosokawa Micron BV; Doetinchem; NL), Processall Mixmill Mixer (Processall Incorporated; Cincinnati; US) und Schugi Flexomix® (Hosokawa Micron BV; Doetinchem; NL). Es ist auch möglich, auf Wirbelschicht- oder Fließbett-Reaktoren als Mischvorrichtung zurückzugreifen.

Erfindungsgemäß wird im Sinne der vorliegenden Erfindung auf den Einsatz einer Düse verzichtet, um die flüssige Additivzubereitung B zu dem Grundpolymer A zu geben, so dass die flüssige Additivzubereitung B also nicht aufgesprüht wird, sondern über ein Rohr ohne Düse in die Mischvorrichtung gegeben wird.

Das erfindungsgemäße Verfahren umfasst im Rahmen einer bevorzugten Ausführungsform dieser Erfindung insbesondere ein Verfahren zur Herstellung wasserabsorbierender Polymerpartikel durch Polymerisation einer Monomerlösung oder-suspension, die
a) mindestens ein ethylenisch ungesättigtes, säuregruppentragendes Monomer, das wahlweise zumindest teilweise als Salz vorliegt,
b) mindestens einen Vernetzer,
c) mindestens einen Initiator,
d) wahlweise ein oder mehrere mit den unter a) genannten Monomeren copolymerisierbare ethylenisch ungesättigte Monomere,
e) wahlweise ein oder mehrere wasserlösliche Polymere
f) Wasser
g) wahlweise Additive und/oder Wirksubstanzen
enthält,
wobei das Verfahren weiterhin
(i) Trocknung des erhaltenen Polymerisats sowie
(ii) wahlweise Mahlung des getrockneten Polymerisats und Siebung des gemahlenen Polymerisats sowie
(iii) wahlweise Oberflächennachvernetzung des getrockneten und gegebenenfalls gemahlenen und gesiebten Polymerisats umfasst,
(iv) sowie weiterhin wahlweise die Nachbehandlung des ggf. oberflächennachvernetzten Polymerisats mit zumindest einem Nachbehandlungsmittel umfasst.

Die erfindungsgemäße Zugabe einer flüssigen Additivzubereitung B, insbesondere wässrigen Additivlösung B, zu einem Grundpolymer A kann im Rahmen der Herstellung der wasserabsorbierender Polymerpartikel mehrfach und/oder zu unterschiedlichen Zeitpunkten erfolgen.

Die erfindungsgemäße Zugabe der flüssigen Additivzubereitung B, insbesondere der wässrigen Additivlösung, kann im Rahmen dieser Erfindung vorzugsweise zu dem Polymerisat, entsprechend Grundpolymer A, vor dem Oberflächennachvernetzungsschritt, insbesondere vor dem Oberflächennachvernetzungsschritt (III), erfolgen und zwar insbesondere zum Zwecke der Oberflächennachvernetzung und/oder die Zugabe der flüssigen Additivzubereitung B, insbesondere wässrigen Additivlösung, kann vorzugsweise zu dem bereits oberflächennachvernetzten Polymerisat gegeben werden und zwar insbesondere zum Zwecke der Nachbehandlung.

Dasjenige Polymerisat, zu dem jeweils eine flüssige Additivzubereitung B, insbesondere wässrige Additivlösung B nach Maßgabe dieser Erfindung über ein Rohr ohne Düse zugegeben wird, wird im Rahmen dieser Erfindung als Grundpolymer A bezeichnet. Das Grundpolymer A kann vorzugsweise ein bereits oberflächennachvernetztes Polymer sein, z.B. zu bezeichnen als Grundpolymer A", es kann aber vorzugsweise auch ein noch oberflächennachzuvernetzendes Polymer, z.B. zu bezeichnen als Grundpolymer A', sein. Dabei befindet sich das Grundpolymer A bei der Zugabe von flüssiger Additivzubereitung B, insbesondere jeweils in einer Mischvorrichtung, z.B. ein einem Vertikal- oder Horizontalmischer.

Wenn in dem erfindungsgemäßen Verfahren das zu polymerisierende Monomer, insbesondere das Monomer a) Acrylsäure ist, die zumindest teilweise als Natriumacrylat vorliegt, so liegt eine bevorzugte Ausführungsform der Erfindung vor. Zu den einsetzbaren Monomeren werden weiter unten noch genauere Ausführungen gemacht.

Grundsätzlich können im Rahmen der vorliegenden Erfindung die üblichen Vernetzter und Vernetzermengen bei der Polymerisation zum Einsatz gelangen. Hierzu werden weiter unten noch genauere Ausführungen gemacht. Wenn die zu polymerisierende Monomerlösung oder -suspension mindestens 0,01 Gew.-% Vernetzer, insbesondere Vernetzer b), bezogen auf unneutralisiertes Monomer, insbesondere unneutralisiertes Monomer a) enthält, so liegt allerdings eine bevorzugte Ausführungsform der Erfindung vor.

Weiterhin entspricht es einer ganz besonders bevorzugten Ausführungsform der Erfindung, wenn im Rahmen des erfindungsgemäßen Verfahrens eine Oberflächennachvernetzung durchgeführt wird. Diese wird insbesondere unter Einsatz einer flüssigen Additivzubereitung B, insbesondere wässrigen Additivlösung B, durchgeführt, die über ein Rohr ohne Düse in die Mischvorrichtung zu dem Grundpolymer A, z.B. zu bezeichnen als Grundpolymer A', gegeben wird. Auch dies wird weiter unten noch genauer erläutert.

Weiterhin ist es bevorzugt, dass man das vorzugsweise oberflächennachvernetze Polymerisat, z.B. zu bezeichnen als Grundpolymer A", einer weiteren Behandlung unterzieht, vorzugsweise Oberflächenbehandlung, vorteilhafterweise durch Zugabe mindestens eines Nachbehandlungsmittels, insbesondere unter Einsatz einer flüssigen Additivzubereitung B, insbesondere wässrigen Additivlösung B, z.B. zu bezeichnen als wässrigen Additivlösung B'. Dies entspricht einer Nachbehandlung des ggf. oberflächennachvernetzten Polymerisats, vorzugsweise mit zumindest einem Nachbehandlungsmittel. Geeignete Nachbehandlungsmittel sind insbesondere Stoffe, die dem Polymerisat zugesetzt werden, um dessen Eigenschaften in gewünschter Richtung zu verändern und/oder dessen Verarbeitbarkeit zu erleichtern. Geeignete Nachbehandlungsmittel sind dem Fachmann aus der Superabsorbertechnologie wohlbekannt. Es handelt sich z.B. um Anti-Staub-Mittel, wie beispielsweise Polyole und/oder oder Polyalkylenglykole, um Anti-Backmittel, wie beispielsweise Sipernate, Aerosile, kationische Tenside, so z.B. quaternäre Ammonium- oder Phosphonium-Salze, um Geruchskontroll-Mittel, wie z.B. Zeolithe, Bentonite, Silica, Cyclodextrine, Riechstoffe, antimikrobielle Wirkstoffe oder Oxidationsmittel.

Grundsätzlich kann das erfindungsgemäße Verfahren ganz ohne Probleme in alle üblichen Verfahren zur Herstellung von wasserabsorbierenden Polymerpartikeln implementiert werden.

Obschon die Herstellung wasserabsorbierender Polymerpartikel an sich wohlbekannt ist, wird im Folgenden ein besonders bevorzugtes Herstellungsverfahren noch näher erläutert, denn die nachfolgend beschriebenen bevorzugten Ausführungsformen führen zu besonders guten Ergebnissen mit Blick auf die Lösung der angestrebten Aufgabe.

Das erfindungsgemäße besonders bevorzugte Verfahren umfasst, wie schon ausgeführt, die Polymerisation einer Monomerlösung oder-suspension, die
a) mindestens ein ethylenisch ungesättigtes, säuregruppentragendes Monomer, das wahlweise zumindest teilweise als Salz vorliegt,
b) mindestens einen Vernetzer,
c) mindestens einen Initiator,
d) wahlweise ein oder mehrere mit den unter a) genannten Monomeren copolymerisierbare ethylenisch ungesättigte Monomere,
e) wahlweise ein oder mehrere wasserlösliche Polymere
f) Wasser
g) wahlweise Additive und/oder Wirksubstanzen
enthält.

Die dabei einsetzbaren Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser. Geeignete einsetzbare Monomere a) sind beispielsweise ethylenisch ungesättigte Carbonsäuren, wie Acrylsäure, Methacrylsäure, und Itaconsäure. Besonders bevorzugte einsetzbare Monomere sind Acrylsäure und Methacrylsäure. Ganz besonders bevorzugt ist Acrylsäure. Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes einsetzbares Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfural, 0,0001 Gew.-% Maleinsäureanhydrid, 0,0003 Gew.-% Diacrylsäure und 0,0050 Gew.-% Hydrochinonmonomethylether. Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%. Die Monomere a) können üblicherweise Polymerisationsinhibitoren, vorzugsweise Hydrochinonhalbether, als Lagerstabilisator enthalten.

Die einsetzbare Monomerlösung kann vorzugsweise bis zu 250 Gew.-ppm, bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere um 50 Gew.-ppm, Hydrochinonhalbether enthalten, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden. Bevorzugte Hydrochinonhalbether sind Hydrochinonmonomethylether (MEHQ) und/oder alpha-Tocopherol (Vitamin E).

Geeignete einsetzbare Vernetzer b) sind z.B. Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind z.B. auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1 , EP 0 559 476 A1 , EP 0 632 068 A1 , WO 93/21237 A1 , WO 2003/104299 A1 , WO 2003/104300 A1 , WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1 , WO 90/15830 A1 und WO 2002/032962 A2 beschrieben.

Bevorzugte Vernetzer b) sind Pentaerythrittriallylether, Tetraalloxyethan, Methylenbismethacrylamid, 15-fach ethoxiliertes Trimethylolpropantriacrylat, Polyethylenglykoldiacrylat, Trimethylolpropantriacrylat und Triallylamin. Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind.

Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propoxylierten Glyzerins, insbesondere das Triacrylat des 3-fach ethoxylierten Glyzerins.

Die Menge an Vernetzer b) beträgt vorzugsweise ≥ 0,01, bevorzugt 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a). Mit steigendem Vernetzergehalt sinkt die Zentrifugenretentionskapazität (CRC) und die Absorption unter einem Druck durchläuft ein Maximum.

Als einsetzbare Initiatoren c) können sämtliche unter den Polymerisationsbedingungen Radikale erzeugende Verbindungen eingesetzt werden, beispielsweise thermische Initiatoren, Redox-Initiatoren, Photoinitiatoren. Geeignete Redox-Initiatoren sind z.B. Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite® FF6 und Brüggolite® FF7 (Brüggemann Chemicals; Heilbronn; DE) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacry- lat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können z.B. Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise kann eine wässrige Monomerlösung verwendet werden. Der Wassergehalt der Monomerlösung beträgt vorzugsweise von 20 bis 75 Gew.-%, besonders bevorzugt von 30 bis 70 Gew.-%, ganz besonders bevorzugt von 40 bis 65 Gew.-%. Es ist auch möglich Monomersuspensionen, d.h. Monomerlösungen mit überschüssigem Monomer a), beispielsweise Natriumacrylat, einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugt einsetzbaren Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete, in der Monomerlösung oder -suspension optional enthaltene Additive und/oder Wirksubstanzen g), sind Stoffe, welche die Eigenschaften der resultierenden Polymerisate in gewünschter Richtung verändern können, deren Verarbeitbarkeit erleichtern können oder das Polymerisat mit einer Zusatzwirkung ausstatten können.

Geeignete Reaktoren sind beispielsweise Knetreaktoren oder Bandreaktoren. Im Kneter wird das bei der Polymerisation einer wässrigen Monomerlösung oder -Suspension entstehende Polymergel durch beispielsweise gegenläufige Rührwellen kontinuierlich zerkleinert, wie in WO 2001/038402 A1 beschrieben. Die Polymerisation auf dem Band wird beispielsweise in DE 38 25 366 A1 und US 6 241 928 beschrieben. Bei der Polymerisation in einem Bandreaktor entsteht ein Polymergel, das in einem weiteren Verfahrensschritt zerkleinert werden muss, beispielsweise in einem Extruder oder Kneter. Es ist aber auch möglich eine wässrige Monomerlösung zu vertropfen und die erzeugten Tropfen in einem erwärmten Trägergasstrom zu polymerisieren. Hierbei können die Verfahrensschritte Polymerisation und Trocknung zusammengefasst werden, wie in WO 2008/040715 A2 und WO 2008/052971 A1 beschrieben.

Die Säuregruppen der erhaltenen Polymergele sind üblicherweise teilweise neutralisiert. Die Neutralisation wird vorzugsweise auf der Stufe der Monomeren durchgeführt. Dies geschieht üblicherweise durch Einmischung des Neutralisationsmittels als wässrige Lösung oder bevorzugt auch als Feststoff. Der Neutralisationsgrad beträgt vorzugsweise von 25 bis 85 mol-%, für "saure" Polymergele besonders bevorzugt von 30 bis 60 mol-%, ganz besonders bevorzugt von 35 bis 55 mol-%, für "neutrale" Polymergele besonders bevorzugt von 65 bis 80 mol-%, ganz besonders bevorzugt von 70 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze wie das Salz des Triethanolamins verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Es ist aber auch möglich die Neutralisation nach der Polymerisation auf der Stufe des bei der Polymerisation entstehenden Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Polymergels eingestellt wird. Wird das Polymergel zumindest teilweise nach der Polymerisation neutralisiert, so wird das Polymergel vorzugsweise mechanisch zerkleinert, beispielsweise mittels eines Extruders, wobei das Neutralisationsmittel aufgesprüht, übergestreut oder aufgegossen und dann sorgfältig untergemischt werden kann. Dazu kann die erhaltene Gelmasse noch mehrmals zur Homogenisierung extrudiert werden.

Das Polymergel kann dann vorzugsweise mit einem Bandtrockner getrocknet werden bis der Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA (European Disposables and Nonwovens Association) empfohlenen Testmethode Nr. WSP 230.2-05 "Moisture Content" bestimmt wird.

Bei einer zu hohen Restfeuchte kann das getrocknete Polymergel eine zu niedrige Glasübergangstemperatur T_{G} aufweisen und ist dann nur schwierig weiter zu verarbeiten. Bei einer zu niedrigen Restfeuchte kann das getrocknete Polymergel zu spröde sein und in den anschließenden Zerkleinerungsschritten können unerwünscht große Mengen an Polymerpartikeln mit zu niedriger Partikelgröße ("fines") anfallen. Der Feststoffgehalt des Gels beträgt vor der Trocknung vorzugsweise von 25 bis 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein Schaufeltrockner verwendet werden.

Das getrocknete Polymergel wird hiernach vorzugsweise gemahlen und klassiert, wobei zur Mahlung üblicherweise ein- oder mehrstufige Walzenstühle, bevorzugt zwei- oder dreistufige Walzenstühle, Schneidmühle, Ultra-Zentrifugalmühle Stiftmühlen, Hammermühlen oder Schwingmühlen, eingesetzt werden können.

Die mittlere Partikelgröße der als Produktfraktion abgetrennten Polymerpartikel beträgt vorzugsweise mindestens 200 µm, besonders bevorzugt von 250 bis 600 µm, ganz besonders von 300 bis 500 µm. Die mittlere Partikelgröße der Produktfraktion kann mittels der von der EDANA (European Disposables and Nonwovens Association) empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von mindestens 150 µm beträgt vorzugsweise mindestens 90 Gew.-%, besonders bevorzugt mindesten 95 Gew.-%, ganz besonders bevorzugt mindestens 98 Gew.-%.

Polymerpartikel mit zu niedriger Partikelgröße senken die Permeabilität Daher sollte der Anteil zu kleiner Polymerpartikel ("fines") niedrig sein. Zu kleine Polymerpartikel werden daher üblicherweise abgetrennt und in das Verfahren rückgeführt. Die geschieht vorzugsweise vor, während oder unmittelbar nach der Polymerisation, d.h. vor der Trocknung des Polymergels. Die zu kleinen Polymerpartikel können vor oder während der Rückführung mit Wasser und/oder wässrigem Tensid angefeuchtet werden.

Es ist auch möglich in späteren Verfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Wird zur Polymerisation ein Knetreaktor verwendet, so werden die zu kleinen Polymerpartikel vorzugsweise während des letzten Drittels der Polymerisation zugesetzt.

Werden die zu kleinen Polymerpartikel sehr früh zugesetzt, beispielsweise bereits zur Monomerlösung, so wird dadurch die Zentrifugenretentionskapazität (CRC) der erhaltenen wasserabsorbierenden Polymerpartikel gesenkt. Dies kann aber beispielsweise durch Anpassung der Einsatzmenge an Vernetzer b) kompensiert werden.

Werden die zu kleinen Polymerpartikel sehr spät zugesetzt, beispielsweise erst in einem dem Polymerisationsreaktor nachgeschalteten Apparat, beispielsweise einem Extruder, so lassen sich die zu kleinen Polymerpartikel nur noch schwer in das erhaltene Polymergel einarbeiten. Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 µm beträgt vorzugsweise mindestens 90 Gew.-%, besonders bevorzugt mindesten 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein. Zu große Polymerpartikel werden daher üblicherweise abgetrennt und in die Mahlung des getrockneten Polymergels rückgeführt.

Die Polymerpartikel können zur weiteren Verbesserung der Eigenschaften oberflächennachvernetzt werden, was im Sinne dieser Erfindung ganz besonders bevorzugt ist.

Geeignete Oberflächennachvernetzer sind insbesondere Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1 , DE 35 23 617 A1 und EP 0 450 922 A2 beschrieben, oder β-Hydroxyalkylamide, wie in DE 102 04 938 A1 und US 6 239 230 beschrieben. Des Weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 Ci Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/031482 A1 Morpholin-2,3-dion und dessen Derivate als geeignete Oberflächennachvernetzer beschrieben. Bevorzugte Oberflächennachvernetzer sind Ethylenkarbonat, Ethylenglykoldiglycidylether, Umsetzungsprodukte von Polyamiden mit Epichlorhydrin und Gemische aus Propylenglykol und 1 ,4-Butandiol. Ganz besonders bevorzugte Oberflächennachvernetzer sind Ethylenkarbonat, 2-Hydroxyethyloxazolidin- 2-on, Oxazolidin-2-on und 1,3-Propandiol.

Weiterhin können auch Oberflächennachvernetzer eingesetzt werden, die zusätzliche polymerisierbare ethylenisch ungesättigte Gruppen enthalten, wie in DE 37 13 601 A1 beschrieben.

Die Menge an Oberflächennachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf die Polymerpartikel.

Der Oberfilächennachvernetzer wird insbesondere mittels einer wässrigen Additivlösung B nach Maßgabe dieser Erfindung über ein Rohr ohne Düse zu den Polymerpartikeln, entsprechend Grundpolymer A, zugegeben.

In einer weiteren bevorzugten Ausführungsform der vorliegenden Erfindung werden vor, während und/oder nach der Oberflächennachvernetzung, insbesondere zusätzlich zu den Oberflächennachvernetzern, polyvalente Kationen auf die Partikeloberfläche aufgebracht. Die einsetzbaren polyvalenten Kationen sind beispielsweise zweiwertige Kationen, wie die Kationen von Zink, Magnesium, Kalzium und Strontium, dreiwertige Kationen, wie die Kationen von Aluminium, vierwertige Kationen, wie die Kationen von Titan und Zirkonium. Als Gegenion sind beispielsweise Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat und Aluminiumlaktat sind bevorzugt. Außer Metallsalzen können auch Polyamine als polyvalente Kationen eingesetzt werden. Die Einsatzmenge an polyvalentem Kation beträgt beispielsweise 0,001 bis 1 ,5 Gew.-%, vorzugsweise 0,005 bis 1 Gew.-%, besonders bevorzugt 0,02 bis 0,8 Gew.-%. jeweils bezogen auf die Polymerpartikel. Die polyvalenten Kationen werden insbesondere mittels einer flüssigen Additivzubereitung B, insbesondere wässrigen Additivlösung B, nach Maßgabe dieser Erfindung über ein Rohr ohne Düse zu den Polymerpartikeln, entsprechend Grundpolymer A, zugegeben.

Die Oberflächennachvernetzung wird üblicherweise so durchgeführt, dass eine Lösung des Oberflächennachvernetzers auf die getrockneten Polymerpartikel aufgegeben wird, und zwar insbesondere mittels einer flüssigen Additivzubereitung B, insbesondere wässrigen Additivlösung B, nach Maßgabe dieser Erfindung über ein Rohr ohne Düse. Im Anschluss daran werden die mit Oberflächennachvernetzer beschichteten Polymerpartikel vorzugsweise thermisch getrocknet, wobei die Oberflächennachvernetzungsreaktion sowohl vor als auch während der Trocknung stattfinden kann.

Das Aufgeben einer Lösung des Oberflächennachvernetzers kann vorzugsweise in Mischern mit bewegten Mischwerkzeugen, wie Schneckenmischer, Scheibenmischer und Schaufelmischer, durchgeführt werden. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar®) Mischer (Gebr. Lödige Maschinenbau GmbH; Paderborn; DE), Vrieco-Nauta Continuous Mixer (Hosokawa Micron BV; Doetinchem; NL), Processall Mixmill Mixer (Processall Incorporated; Cincinnati; US) und Schugi Flexomix® (Hosokawa Micron BV; Doetinchem; NL). Es ist aber auch möglich die Oberflächennachvernetzerlösung in einem Wirbelbett aufzugeben, insbesondere nach Maßgabe dieser Erfindung.

Die Oberflächennachvernetzer werden insbesondere als wässrige Lösung eingesetzt. Über den Gehalt an nichtwässrigem Lösungsmittel bzw. Gesamtlösungsmittelmenge kann die Eindringtiefe des Oberflächennachvernetzers in die Polymerpartikel eingestellt werden.

Der Begriff der wässrigen Lösung umfasst im Sinne dieser Erfindung jegliche flüssige Zubereitung, die einen Mindestanteil an Wasser von 5 Gew.-%, vorzugsweise ≥ 10 Gew.-%, insbesondere ≥ 50 Gew.-% bezogen auf die Zubereitung aufweist.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1 ,3-Propandiol/Wasser und Propylenglykol/Wasser, wobei das Mischungsmassenverhältnis vorzugsweise von 20:80 bis 40:60 beträgt.

Die bevorzugte thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Hosokawa Bepex® Horizontal Paddle Dryer (Hosokawa Micron GmbH; Leingarten; DE), Hosokawa Bepex® Disc Dryer (Hosokawa Micron GmbH; Leingarten; DE) und Nara Paddle Dryer (NARA Machinery Europe; Frechen; DE). Überdies können auch Wirbelschichttrockner eingesetzt werden. Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen z.B. im Bereich 80 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

Anschließend können die oberflächennachvernetzten Polymerpartikel erneut klassiert werden, wobei zu kleine und/oder zu große Polymerpartikel abgetrennt und in das Verfahren rückgeführt werden.

Die vorzugsweise oberflächennachvernetzten Polymerpartikel können zur weiteren Verbesserung der Eigenschaften nachbehandelt werden, vorzugsweise mit einem Nachbehandlungsmittel nachbehandelt werden, insbesondere beschichtet und/oder nachbefeuchtet werden. Auch diese Nachbehandlung kann im Sinne einer weiteren bevorzugten Ausführungsform der Erfindung mittels einer flüssigen Additivzubereitung B, insbesondere wässrigen Additivlösung B, nach Maßgabe dieser Erfindung über ein Rohr ohne Düse ausgeführt werden.

Die optionale Nachbefeuchtung wird vorzugsweise bei 30 bis 80°C, besonders bevorzugt bei 35 bis 70°C, ganz besonders bevorzugt bei 40 bis 60°C, durchgeführt. Bei zu niedrigen Temperaturen neigen die wasserabsorbierenden Polymerpartikel zum Verklumpen und bei höheren Temperaturen verdampft bereits merklich Wasser. Die zur optionalen Nachbefeuchtung eingesetzte Wassermenge beträgt vorzugsweise von 1 bis 10 Gew.-%, besonders bevorzugt von 2 bis 8 Gew.-%, ganz besonders bevorzugt von 3 bis 5 Gew.-%. Durch die optionale Nachbefeuchtung wird die mechanische Stabilität der Polymerpartikel erhöht und deren Neigung zur statischen Aufladung vermindert. Geeignete optionale Beschichtungen zur Verbesserung der Anquellgeschwindigkeit sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete optionale Beschichtungen zur Staubbindung sind beispielsweise Polyole. Geeignete optionale Beschichtungen gegen die unerwünschte Verbackungsneigung der Polymerpartikel sind beispielsweise pyrogene Kieselsäure, wie Aerosil® 200, und Tenside, wie Span® 20.

Bevorzugte wasserabsorbierende Polymerpartikel weisen einen Feuchtegehalt von vorzugsweise 1 bis 15 Gew.-%, besonders bevorzugt 2 bis 10 Gew.-%, ganz besonders bevorzugt 3 bis 5 Gew.-%, auf, wobei der Feuchtegehalt gemäß der von der EDANA (European Disposables and Nonwovens Association) empfohlenen Testmethode Nr. WSP 230.2-05 "Moisture Content" bestimmt wird.

Die im Rahmen dieser Erfindung vorteilhafterweise resultierenden wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der im Rahmen dieser Erfindung vorteilhafterweise resultierenden wasserabsorbierenden Polymerpartikel beträgt üblicherweise weniger als 60 g/g. Die Zentrifugenretentionskapazität (CRC) wird gemäß der von der EDANA (European Disposables and Nonwovens Association) empfohlenen Testmethode Nr. WSP 241.3-10 "Centrifuge retention capacity" bestimmt. Die im Rahmen dieser Erfindung vorteilhafterweise resultierenden wasserabsorbierenden Polymerpartikel weisen eine Absorption unter einem Druck von 49,2 g/cm² (0,7 psi) von typischerweise mindestens 15 g/g, vorzugsweise mindestens 20 g/g, bevorzugt mindestens 22 g/g, besonders bevorzugt mindestens 23,5 g/g, ganz besonders bevorzugt mindestens 25 g/g, auf. Die Absorption unter einem Druck von 49,2 g/cm² (0,7 psi) der wasserabsorbierenden Polymerpartikel beträgt üblicherweise weniger als 35 g/g. Die Absorption unter einem Druck (Absorption Against Pressure, AAP), hier unter einem Druck von 49,2 g/cm² (0,7 psi), wird gemäß der Edana-Methode Nr. WSP242.3-10 bestimmt.

Weiterhin hat es sich als vorteilhaft erweisen, wenn gemäß einer bevorzugten Ausführungsform der Erfindung der Gehalt der Monomerlösung oder -suspension an Eisen-Ionen unter 5 ppm, vorzugsweise unter 3 ppm und in besonders bevorzugter Weise unter 1 ppm liegt.

Im Rahmen der vorliegenden Erfindung können mehrere flüssige Additivzubereitungen B, insbesondere wässrige Additivlösungen B, z.B. bezeichnet als Additivlösungen B^{I}, B^{II}, B^{III}, B^{IV} usw. zu unterschiedlichem Grundpolymer A, z.B. bezeichnet als Grundpolymer A^{I}, A^{II}, A^{III}, A^{IV} usw. gegeben werden. Beispielsweise werden im Rahmen eines bevorzugten erfindungsgemäßen Verfahrens im Zuge der Oberflächennachvernetzung die Additivlösungen B^{I} und/oder B" zu dem Grundpolymer A gegeben, so dass dann ein oberflächennachvernetzes Polymerisat resultiert, das beispielhaft als Grundpolymer A^{I} bezeichnet wird. Im weiteren Verlauf desselben bevorzugten Verfahrens können dann zu dem Grundpolymer A^{I} im Zuge der Nachbehandlung z.B. noch die Additivlösungen B^{III} und/oder B^{IV} gegeben werden.

Die flüssige Additivzubereitung B, insbesondere wässrige Additivlösung B kann grundsätzlich all jene Additive und Zuschlagstoffe umfassen, welche bei der Herstellung und Nachbehandlung von wasserabsorbierenden Polymeren eingesetzt werden können. Dabei handelt es sich insbesondere um Oberflächennachvernetzer, Metallsalze, insbesondere umfassend polyvalente Kationen, filmbildenden Polymere, thermoplastische Polymere, Dendrimere, polykationische Polymere (wie vorzugsweise Polyvinylamin, Polyethylenimin oder Polyallylamin), wasserunlösliche polyvalente Metallsalze, wie vorzugsweise Magnesiumcarbonat, Magnesiumoxid, Magnesiumhydroxid, Calciumcarbonat, Calciumsulfat oder Calciumphosphat, wasserlösliche mono- oder polyvalente Metallsalzen wie vorzugsweise Aluminiumsulfat, Natrium-, Kalium-, Zirkonium- oder Eisensalze, anorganische Partikel, wie vorzugsweise pyrogenes Aluminiumoxid, Tonminerale, pyrogene Kieselsäure, kolloidale Kieselsäuresole Titandioxid, nicht pyrogenes Aluminiumoxid und Magnesiumoxid, Alkalimetallsalze, wie vorzugsweise Natrium- und Kaliumsulfat, Natrium- und Kaliumlaktate, -citrate, -sorbate, Entstaubungsmittel, wie vorzugsweise Polyethylenglykole mit einem Molekulargewicht von z.B. 400 bis 20000 g/mol, Polyglyzerin, 3- bis 100-fach ethoxylierte Polyole, wie vorzugsweise Trimethylolpropan, Glyzerin, Sorbitol und Neopentylglykol, Geruchskontrollmittel, wie z.B. Zeolithe, Cyclodextrine, antimikrobielle Wirkstoffe und/oder Riechstoffe.

Gemäß einer bevorzugten Ausführungsform der Erfindung wird die flüssige Additivzubereitung B, insbesondere wässrige Additivlösung B, z.B. zu bezeichnen als wässrige Additivlösung B^{I}, durch Mischen einer ersten additivhaltigen Flüssigkeit I, vorzugsweise wässrigen additivhaltigen Lösung I, vorzugsweise umfassend mindestens einen Oberflächennachvernetzer, mit mindestens einer zweiten additivhaltigen Flüssigkeit II, vorzugsweise additivhaltigen wässrigen Lösung II, vorzugsweise umfassend ein polyvalentes Kation, erzeugt, wobei die Flüssigkeiten I und II dem Rohr getrennt zugeführt werden und erst in dem Rohr vereinigt und gemischt werden, so dass aus dem Rohr eine Mischung der Flüssigkeiten I und II als flüssige Additivzubereitung B, insbesondere wässrige Additivlösung B, hier als wässrige Additivlösung B^{I} bezeichnet, austritt. Gemäß dieser bevorzugten Ausführungsform der Erfindung umfasst also die wässrige Additivlösung B, hier als wässrige Additivlösung B^{I} bezeichnet, die Mischung von zumindest zwei wässrigen additivhaltigen Lösungen. Das Mischen der wässrigen additivhaltigen Lösungen erfolgt erst in dem Rohr, z.B in einem T-Stück oder Verteiler, so dass aus dem Rohr eine Mischung der Lösungen I und II als wässrige Additivlösung B, hier als wässrige Additivlösung B^{I} bezeichnet, austritt.

Die erste Flüssigkeit I, vorzugsweise wässrige additivhaltige Lösung I kann beliebige Additive und Zuschlagstoffe umfassen, vorzugsweise umfasst sie mindestens einen Oberflächennachvernetzer. Insbesondere umfasst sie keine polyvalenten Kationen.

Die zweite Flüssigkeit II, vorzugsweise wässrige additivhaltige Lösung II kann ebenfalls beliebige Additive und Zuschlagstoffe umfassen, vorzugsweise umfasst sie ein polyvalentes Kation. Insbesondere umfasst sie keinen Oberflächennachvernetzer der Flüssigkeit I.

Gemäß einer weiteren bevorzugten Ausführungsform der Erfindung können weitere Flüssigkeiten, vorzugsweise wässrige Lösungen über das Rohr zu dem Grundpolymer A in die Mischvorrichtung dosiert werden, wobei auch diese Flüssigkeiten dem Rohr getrennt zugeführt werden und erst in dem Rohr mit den Flüssigkeiten I und II oder deren Gemisch vereinigt werden, so dass aus dem Rohr eine Mischung aller eingesetzten Flüssigkeiten als flüssige Additivzubereitung B, insbesondere wässrige Additivlösung B, austritt.

Wenn die Flüssigkeiten I und II sowie die ggf. vorhandenen weiteren Flüssigkeiten in dem Rohr über ein oder mehrere T-Stücke oder Verteiler vereinigt und dabei gemischt werden und damit die flüssige Additivzubereitung B, insbesondere wässrige Additivlösung B bilden, so liegt eine weitere bevorzugte Ausführungsform der Erfindung vor.

Die Austrittsöffnung des Rohrs kann gemäß einer weiteren bevorzugten Ausführungsform der Erfindung kreisförmig, oval oder viereckig sein.

Wenn der Innendurchmesser des Rohres am Austritt im Bereich von 1 mm - 50 mm, z.B. 2 mm - 40 mm, vorteilhafterweise 3 mm - 30 mm, bevorzugt 5 mm bis 25, insbesondere 10 bis 20 mm liegt, so handelt es sich um eine weitere bevorzugte Ausführungsform der Erfindung.

Insbesondere weist die gesamte Rohrleitung im Wesentlichen einen Innendurchmesser von 1 mm - 50 mm auf, z.B. von 10 bis 50 mm. Die gesamte Rohrleitung zur Eindosierung in die Mischvorrichtung kann eine Länge von z.B. 20 cm bis 10 m aufweisen, wie z.B. 0,5 m bis 5 m oder z.B. 1m bis 3 m, vorzugsweise sich ergebend aus einfachen Zweckmäßigkeitsüberlegungen ausgerichtet auf die jeweils spezifische Anlage. Der Fachmann kann ohne weiteres mit wenigen orientierenden Versuchen eine geeignete Rohrleitungslänge festlegen.

Wenn der Rohrabschnitt, in dem die Vereinigung der zuzugebenden Flüssigkeiten, insbesondere Lösungen stattfindet, und die Austrittsöffnung im Wesentlichen den gleichen Durchmesser aufweisen, so liegt wiederum eine weitere bevorzugte Ausführungsform der Erfindung vor, wobei sich das Rohr in Richtung Austrittsöffnung vorzugsweise verjüngt.

Die Austrittsöffnung des Rohres kann vorzugsweise horizontal oder vertikal ausgerichtet sein, wobei insbesondere die vertikale Austrittsöffnung bevorzugt ist. Insbesondere zeigt die Austrittsöffnung des Rohrs nach unten, vorzugsweise senkrecht nach unten.

Gemäß einer bevorzugten Ausführungsform der Erfindung beträgt die Zeitspanne zwischen der Vereinigung der zuzugebenden Flüssigkeiten, insbesondere Lösungen, z.B. der zuzugebenden Lösungen I und II und dem Austritt der Mischung, welche die flüssige Additivzubereitung B, vorzugsweise wässrige Additivlösung B ist, aus dem Rohr mindestens 1 Sekunde und weniger als 60 Sekunden, vorzugsweise weniger als 30 Sekunden. Die zuzugebenden Flüssigkeiten sind diejenigen Flüssigkeiten, welche bei der Vereinigung in dem Rohr die Additivlösung B ergeben.

Die Menge der flüssigen Additivzubereitung B, insbesondere wässrigen Additivlösung B, beträgt vorzugsweise zwischen 0,1 bis 10 Gew.-%, bezogen auf Grundpolymer A, beträgt.

Bei dem Grundpolymer A handelt es sich vorzugsweise um eine teilneutralisierte, vernetzte Polyacrylsäure ist, z.B. zu bezeichnen als Grundpolymer A^{I}.

Wird im Anschluß an die Zugabe der flüssigen Additivzubereitung B, insbesondere wässrige Additivlösung B, zu dem Grundpolymer A das Polymer thermisch getrocknet, wobei eine Oberflächennachvernetzungsreaktion stattfindet, die sowohl vor als auch während der Trocknung stattfinden kann, wobei der bevorzugte Temperaturbereich zur Oberflächennachvernetzung und Trocknung von ≥ 65°C bis 200°C, insbesondere 100 bis 200°C, besonders bevorzugt 150 bis 190°C reicht, so liegt eine weitere bevorzugte Ausführungsform der Erfindung vor.

Nach einer weiteren bevorzugten Ausführungsform der Erfindung handelt es sich bei dem Grundpolymer A um eine teilneutralisierte, oberflächennachvernetzte Polyacrylsäure, z.B. zu bezeichnen als Grundpolymer A^{II}. Wird während der Zugabe der flüssigen Additivzubereitung B, insbesondere wässrigen Additivlösung B, zu dem Grundpolymer A, eben bezeichnet als Grundpolymer A^{II}, das oberflächennachvernetzte Polymer gekühlt, vorzugsweise auf eine Temperatur < 65°C, insbesondere < 50°C, und der Feuchtegehalt des Polymers erhöht, vorzugsweise auf bis 10 Gew.-%, bevorzugt 0,01 bis 5 Gew.-%, besonders bevorzugt 0,1 bis 3 Gew.-%, gemessen mittels Karl-Fischer-Titration, so liegt eine weitere bevorzugte Ausführungsform der Erfindung vor.

Weiterhin ist es im Rahmen dieser Erfindung bevorzugt, dass das Grundpolymer A zu mindestens 80 Gew.-% eine Korngröße zwischen 150 und 850 µm, insbesondere zu mindestens 80 Gew.-% eine Korngröße zwischen 150 und 600 µm aufweist.

Eine weitere bevorzugte Ausführungsform der Erfindung liegt vor, wenn die flüssige Additivzubereitung B, insbesondere wässrige Additivlösung B solche Additivstoffe umfasst, welche die anwendungstechnischen Eigenschaften des Grundpolymers A in gewünschter Richtung verändern und/oder dessen Verarbeitbarkeit erleichtern oder das resultierende Polymerisat mit einer Zusatzwirkung ausstatten. Solche Additivstoffe sind z.B. Aluminiumsalze, wie z.B. Aluminiumsulfat oder Aluminium-Laktat. Die Auswahl der Additivstoffe ist unkritisch und der Fachmann kann auf die Gesamtheit der ihm bekannten Additivstoffe zurückgreifen. Geeignete Additivstoffe sind vorzugsweise ausgewählt aus Oberflächennachvernetzern, Metallsalzen, insbesondere umfassend polyvalente Kationen, filmbildenden Polymeren, thermoplastischen Polymeren, Dendrimeren, polykationische Polymeren (wie vorzugsweise Polyvinylamin, Polyethylenimin oder Polyallylamin), wasserunlöslichen polyvalenten Metallsalzen, wie vorzugsweise Magnesiumcarbonat, Magnesiumoxid, Magnesiumhydroxid, Calciumcarbonat, Calciumsulfat oder Calciumphosphat, wasserlöslichen mono- oder polyvalenten Metallsalzen, wie vorzugsweise Aluminiumsulfat, Natrium-, Kalium-, Zirkonium- oder Eisensalze, anorganische Partikel, wie vorzugsweise pyrogenes Aluminiumoxid, Tonminerale, pyrogene Kieselsäure, kolloidale Kieselsäuresole Titandioxid, nicht pyrogenes Aluminiumoxid und Magnesiumoxid, Alkalimetallsalze, wie vorzugsweise Natrium- und Kaliumsulfat, Natrium- und Kaliumlaktate, -citrate, -sorbate, Entstaubungsmittel, wie vorzugsweise Polyethylenglykole mit einem Molekulargewicht von z.B. 400 bis 20000 g/mol, Polyglyzerin, 3- bis 100-fach ethoxylierte Polyole, wie vorzugsweise Trimethylolpropan, Glyzerin, Sorbitol und Neopentylglykol, Geruchskontrollmittel, wie z.B. Zeolithe, Cyclodextrine, antimikrobielle Wirkstoffe und/oder Riechstoffe.

Ein großer Vorteil der vorliegenden Erfindung ist es, dass es auch die einfache Zugabe miteinander unverträglicher Additive ermöglicht, da der Prozess so gestaltet werden kann, dass diese frühestens in dem Rohr und dort nur für sehr kurze Zeit, z.B. wenige Sekunden, aufeinandertreffen.

Insbesondere kann es im Sinne dieser Erfindung bevorzugt sein, dass im Rahmen des Herstellungsverfahrens zuzugebende Additivstoffe strikt getrennt über mindestens zwei, vorzugsweise drei separate Flüssigkeiten, insbesondere wässrige Lösungen in das Rohr gegeben werden, so dass erst in dem Rohr die flüssige Additivzubereitung B, insbesondere wässrigen Additivlösung B gebildet wird. Dies entspricht einer bevorzugten Ausführungsform der Erfindung. Dadurch wird eine mögliche Dekomposition der flüssigen Additivzubereitung B verhindert, da diese erst im Prozess selbst entsteht und sofort weiter verarbeitet wird.

Beträgt die Wegstrecke ab der Vereinigung der zuzugebenden Flüssigkeiten, insbesondere Lösungen bis zum Austritt der Mischung, welche die flüssige Additivzubereitung B, insbesondere wässrige Additivlösung B ist, aus dem Rohr weniger als 2 m, vorzugsweise weniger als 1 m, so liegt eine weitere bevorzugte Ausführungsform der Erfindung vor.

Einer weiteren bevorzugten Ausführungsform der Erfindung entspricht es, wenn die flüssige Additivzubereitung B, insbesondere wässrige Additivlösung B aus der Austrittsöffnung des Rohrs auf das Grundpolymer A in einem zusammenhängenden Strahl trifft oder insbesondere auf das Grundpolymer A träufelt.

Die flüssige Additivzubereitung B, insbesondere wässrige Additivlösung B, weist vorzugsweise einen Wassergehalt ≥ 10 Gew.-% auf, z.B. ≥ 30 Gew.-% oder ≥ 40 Gew.-%, vorteilhafterweise von mindestens 50 Gew.-%, vorteilhafter von mindestens 60 Gew.-% oder 70 Gew.-%, weiter vorteilhaft von mindestens 80 Gew.-%, vorzugsweise von mindestens 90 Gew.-% auf. Eine Obergrenze für Wasser kann z.B. bei 99 Gew.-% liegen. Der Additivgehalt (ohne Wasser) der wässrigen Additivlösung B kann z.B. ≥ 0,01 Gew.-% bis 90 Gew.-% betragen, beispielsweise 1 Gew.-% bis 50 Gew.-%, wie z.B. 5 Gew.-% bis 20 Gew.-%.

Insbesondere kann die flüssige Additivzubereitung B, insbesondere wässrige Additivlösung B bei Austritt aus der Austrittsöffnung eine Temperatur von mindestens 10°C, vorteilhafterweise 30°C, vorzugsweise mindestens 40°C aufweisen.

Die Erfindung umfasst die Möglichkeit, dass flüssige Additivzubereitungen über 2 oder mehr separate Rohre in die Mischvorrichtung gebracht werden.

Ein weiterer Gegenstand der vorliegenden Erfindung ist ein wasserabsorbierendes Polymer, erhältlich nach einem Verfahren wie zuvor beschrieben.

Gemäß einer bevorzugten Ausführungsform der Erfindung weisen die erfindungsgemäßen wasserabsorbierenden Polymerpartikel
(a) eine Zentrifugenretentionskapazität (CRC) von mindestens 30 g/g,
(b) eine Absorption unter Druck (AAP 0.7psi) von mindestens 20 g/g,
auf.

Wenn bei den erfindungsgemäßen wasserabsorbierenden Polymerpartikeln der Anteil an Partikeln mit einer Partikelgröße von mindestens 150 µm mindestens 90 Gew.-%, besonders bevorzugt mindesten 95 Gew.-%, ganz besonders bevorzugt mindestens 98 Gew.-% beträgt und der Anteil an Partikeln mit einer Partikelgröße von höchstens 850µm vorzugsweise mindestens 90 Gew.-%, besonders bevorzugt mindesten 95 Gew.-%, ganz besonders bevorzugt mindestens 98 Gew.-% beträgt, so liegt eine weitere bevorzugte Ausführungsform der Erfindung vor.

Die vorliegende Erfindung ermöglicht die Bereitstellung von Artikeln, welche wasserabsorbierende Polymerpartikel enthalten. Ein weiterer Gegenstand der Erfindung ist somit ein Artikel, insbesondere flüssigkeitsaufnehmender Hygieneartikel, beinhaltend erfindungsgemäße wasserabsorbierende Polymerpartikel.

Bevorzugte demgemäße Artikel sind z.B. jegliche Inkontinenzhilfsmittel, wie insbesondere Windeln sowie Hygieneartikel, wie insbesondere Damenbinden und Tampons.

### Beispiel

Das erfindungsgemäße Verfahren kann grundsätzlich in alle bestehenden, insbesondere großtechnischen Prozesse zur Superabsorberherstellung implementiert werden.

### Allgemeines Herstellverfahren

300 kg Acrylsäure wurde mit 429,1 kg H₂O; 1,2 kg Allyloxypolyethylenglykolacrylsäureester und 1,2 kg Polyethylenglykol-300-di- acrylat gemischt und auf 10°C gekühlt. Danach wurden unter Kühlen insgesamt 233,1 kg 50%ige Natronlauge so langsam zugesetzt, dass die Temperatur 30°C nicht überstieg. Anschließend wurde die Lösung bei 20°C mit Stickstoff gespült und dabei weiter abgekühlt. Bei Erreichen der Starttemperatur von 4°C wurden die Initiatorlösungen (0,1 kg 2,2'-Azobis-2-amidinopropan-dihydrochlorid in 10 kg H₂O; 0,15 kg Natriumperoxydisulfat in 10 kg H₂O; 0,1 kg 30%ige Wasserstoffperoxidlösung in 1 kg H₂O und 0,01 kg Ascorbinsäure in 2 kg Wasser) zugesetzt. Die Polymerisation wurde auf einem Endlosband mit einer Verweilzeit von ca. 40 Minuten durchgeführt.

Das entstandene Gel wurde zerkleinert und bei 150 - 180°C 60 Minuten getrocknet. Das getrocknete Polymerisat wurde grob zerstoßen, gemahlen und kontinuierlich zu einem Pulver mit einer Partikelgröße von 150 bis 850 µm abgesiebt.

Dieses Fraktion, nachfolgend auch Grundpolymer genannt, wurde zur Oberflächennachvernetzung kontinuierlich in einem Mischer mit Additiven, wie nachfolgend angegeben, zur Oberflächenvernetzung beaufschlagt und in einem Paddeltrockner auf 180°C erhitzt (Verweilzeit ca. 40 Min.).

Das danach erhaltene Produkt wurde nach dem Abkühlen erneut klassiert, wobei die Fraktion mit einer Partikelgröße von 150 bis 850 µm als Verfahrensendprodukt betrachtet wurde.

### Oberflächenvernetzung

Bei dem zuvor beschriebenen Herstellverfahren wurde zur Oberflächenvernetzung eine flüssige Additivzubereitung auf das Polymerisat, genannt Grundpolymer, gegeben.

### Variante a

Bei der Variante a wurden im Rahmen der Oberflächenvernetzung auf die vorliegende Erfindung zurückgegriffen, d.h. es wurde eine wässrige Additivlösung B über ein Rohr ohne Düse in die Mischvorrichtung auf das Grundpolymer dosiert.

Dazu wurden eine erste Lösung I, enthaltend 2,5 Gew.-% 2-Oxazolidinon, 28 Gew.-% Isopropanol, 2,5 Gew.-% 1,2-Propandiol, 0,7 Gew.% Sorbitanmonococoat und 66,3 Gew.-% Wasser, sowie eine zweite Lösung II, enthaltend 27 Gew.-% Aluminiumsulfat in Wasser bereitgestellt.

Die Lösungen I und II wurden dem Rohr strikt getrennt zugeführt und erst in dem Rohr miteinander vereinigt, so dass aus dem Rohr eine Mischung der eingesetzten Lösungen I und II als wässrige Additivzubereitung B austrat. Dabei wurde die Zugabe so eingestellt, dass die Lösung I in einer Menge von 3,5 Gew.-% bezogen auf das Polymer und die Lösung II in einer Menge von 1,59 Gew.-% bezogen auf Polymer zum Einsatz kam.

Variante a führte im Rahmen des allgemeinen Herstellverfahrens zu Endprodukt a.

### Variante b

Bei der Variante b wurden auf die übliche Vorgehensweise zurückgegriffen, d.h. die eben genannten Lösungen I und II wurden zur Oberflächenvernetzung in einem Behälter zusammengemischt und bildeten eine wässrige Additivlösung. Diese wässrige Additivlösung wurde zur Oberflächenvernetzung im Mischer auf herkömmliche Weise mittels einer Düse auf das Grundpolymer gesprüht. Variante b führte im Rahmen des allgemeinen Herstellverfahrens zu Endprodukt b.

Variante b unterschied sich von Variante a alleine in der Aufbringung der wässrigen Additivlösung.

### Ergebnis:

Das Herstellverfahren nach Variante a ermöglichte eine störungsfreie Zugabe der flüssigen Additivzubereitung bei der Herstellung der wasserabsorbierenden Polymerpartikel. Die Produktqualität wurde trotz des Verzichtes auf die Nutzung von Düsen zum Versprühen der flüssigen Additivzubereitungen nicht beeinträchtigt. Bei Variante B kam es dagegen zur einer Blockierung des Mischers.

## Patentansprüche

1. Verfahren zur Herstellung wasserabsorbierender Polymere, wobei ein Grundpolymer A mit einer flüssigen Additivzubereitung B, insbesondere wässrigen Additivlösung B, in einer Mischvorrichtung in Kontakt gebracht und vermischt wird, **dadurch gekennzeichnet, dass** das Grundpolymer A auf Basis zu mindestens 30% neutralisierter Säuregruppen tragender Monomere hergestellt wird und die flüssige Additivzubereitung B, insbesondere die wässrige Additivlösung B, über ein Rohr ohne Düse in die Mischvorrichtung dosiert wird, wobei die flüssige Additivzubereitung B durch Mischen einer ersten Flüssigkeit I, vorzugsweise einer wässrigen, additivhaltigen Lösung I, vorzugsweise umfassend mindestens einen Oberflächennachvernetzer, mit mindestens einer zweiten Flüssigkeit II, vorzugsweise einer wässrigen, additivhaltigen Lösung II, vorzugsweise umfassend ein polyvalentes Kation, resultiert, wobei die Flüssigkeiten I und II dem Rohr getrennt zugeführt werden und erst in dem Rohr vereinigt und gemischt werden, so dass aus dem Rohr eine Mischung der Flüssigkeiten I und II als flüssige Additivzubereitung B, insbesondere wässrige Additivlösung B, austritt.

2. Verfahren nach Anspruch 1, **dadurch gekennzeichnet, dass** weitere Flüssigkeiten, insbesondere wässrige Lösungen, über das Rohr zu dem Grundpolymer A in die Mischvorrichtung dosiert werden, wobei auch diese Flüssigkeiten dem Rohr getrennt zugeführt werden und erst in dem Rohr mit den Flüssigkeiten I und II oder deren Gemisch vereinigt werden, so dass aus dem Rohr eine Mischung aller eingesetzten Flüssigkeiten als flüssige Additivzubereitung B, insbesondere wässrige Additivlösung B, austritt.

3. Verfahren nach einem der Ansprüche 1 oder 2, **dadurch gekennzeichnet, dass** die Flüssigkeiten I und II sowie die ggf. vorhandenen weiteren Flüssigkeiten in dem Rohr über ein oder mehrere T-Stücke oder Verteiler vereinigt und dabei gemischt werden und so die flüssige Additivzubereitung B, insbesondere wässrige Additivlösung B, bilden.

4. Verfahren nach einem der Ansprüche 1 bis 3, **dadurch gekennzeichnet, dass** der Innendurchmesser des Rohres im Bereich von 1 - 50 mm, vorzugsweise 5 - 20 mm, liegt.

5. Verfahren nach einem der Ansprüche 2 bis 4, **dadurch gekennzeichnet, dass** die Zeitspanne zwischen der Vereinigung der zuzugebenden Flüssigkeiten und dem Austritt der Mischung, welche die flüssige Additivzubereitung B, insbesondere wässrige Additivlösung B ist, aus dem Rohr weniger als 60 Sekunden, vorzugsweise weniger als 30 Sekunden, insbesondere aber mindestens 1 Sekunde beträgt.

6. Verfahren gemäß einem der Ansprüche 1 bis 5, **dadurch gekennzeichnet, dass** das Grundpolymer A eine teilneutralisierte, vernetzte Polyacrylsäure ist.

7. Verfahren nach Anspruch 6, **dadurch gekennzeichnet, dass** im Anschluss an die Zugabe der flüssigen Additivzubereitung B, insbesondere wässrigen Additivlösung B, zu dem Grundpolymer A das Polymer thermisch getrocknet wird, wobei eine Oberflächennachvernetzungsreaktion stattfindet, die sowohl vor als auch während der Trocknung stattfinden kann, wobei der bevorzugte Temperaturbereich zur Oberflächennachvernetzung und Trocknung von ≥ 65°C bis 200°C, insbesondere 100 bis 200°C, besonders bevorzugt 150 bis 190°C reicht.

8. Verfahren gemäß einem der Ansprüche 1 bis 5, **dadurch gekennzeichnet, dass** das Grundpolymer A eine teilneutralisierte, oberflächennachvernetzte Polyacrylsäure ist.

9. Verfahren nach Anspruch 8, **dadurch gekennzeichnet, dass** während der Zugabe der flüssigen Additivzubereitung B, insbesondere wässrigen Additivlösung B, zu dem Grundpolymer A das oberflächennachvernetzte Polymer gekühlt wird, vorzugsweise auf eine Temperatur < 65°C, insbesondere < 50°C, und der Feuchtegehalt des Polymers erhöht wird, vorzugsweise auf bis 10 Gew.-%, vorzugsweise 0,01 bis 5 Gew.-%, besonders bevorzugt 0,1 bis 3 Gew.-%, eingestellt wird, ermittelt durch Karl-Fischer-Titration.

10. Verfahren gemäß einem der Ansprüche 1 bis 9, **dadurch gekennzeichnet, dass** das Grundpolymer A zu mindestens 80 Gew.-% eine Korngröße zwischen 150 und 850 µm, insbesondere zu mindestens 80 Gew.-% eine Korngröße zwischen 150 und 600 µm aufweist.

11. Verfahren gemäß einem der Ansprüche 1 bis 10, **dadurch gekennzeichnet, dass** die flüssige Additivzubereitung B, insbesondere wässrige Additivlösung B, solche Additivstoffe umfasst, welche die anwendungstechnischen Eigenschaften des Grundpolymers A in gewünschter Richtung verändern und/oder dessen Verarbeitbarkeit erleichtern oder das resultierende Polymerisat mit einer Zusatzwirkung ausstatten, vorzugsweise ausgewählt aus Oberflächennachvernetzern, Metallsalzen, insbesondere umfassend polyvalente Kationen, filmbildenden Polymeren, thermoplastischen Polymeren, Dendrimeren, polykationische Polymeren (wie vorzugsweise Polyvinylamin, Polyethylenimin oder Polyallylamin), wasserunlöslichen polyvalenten Metallsalzen, wie vorzugsweise Magnesiumcarbonat, Magnesiumoxid, Magnesiumhydroxid, Calciumcarbonat, Calciumsulfat oder Calciumphosphat, wasserlöslichen mono- oder polyvalenten Metallsalzen, wie vorzugsweise Aluminiumsulfat, Natrium-, Kalium-, Zirkonium- oder Eisensalze, anorganische Partikel, wie vorzugsweise pyrogenes Aluminiumoxid, Tonminerale, pyrogene Kieselsäure, kolloidale Kieselsäuresole Titandioxid, nicht pyrogenes Aluminiumoxid und Magnesiumoxid, Alkalimetallsalze, wie vorzugsweise Natrium- und Kaliumsulfat, Natrium- und Kaliumlaktate, -citrate, -sorbate, Entstaubungsmittel, wie vorzugsweise Polyethylenglykole mit einem Molekulargewicht von z.B. 400 bis 20000 g/mol, Polyglyzerin, 3- bis 100-fach ethoxylierte Polyole, wie vorzugsweise Trimethylolpropan, Glyzerin, Sorbitol und Neopentylglykol, Geruchskontrollmittel, wie z.B. Zeolithe, Cyclodextrine, antimikrobielle Wirkstoffe und/oder Riechstoffe.

12. Verfahren gemäß einem der Ansprüche 1 bis 11, **dadurch gekennzeichnet, dass** die Wegstrecke ab der Vereinigung der zuzugebenden Flüssigkeiten bis zum Austritt der Mischung, welche die flüssige Additivzubereitung B, insbesondere wässrige Additivlösung B ist, aus dem Rohr weniger als 2m, vorzugsweise weniger als 1 m beträgt.

13. Verfahren gemäß einem der Ansprüche 1 bis 12, **dadurch gekennzeichnet, dass** die flüssige Additivzubereitung B, insbesondere wässrige Additivlösung B, einen Wassergehalt von mindestens 50 Gew.-%, vorteilhafterweise mindestens 80 Gew.-%, vorzugsweise mindestens 90 Gew.-% hat.

## Claims

1. Process for producing water-absorbing polymers wherein a base polymer A is contacted and mixed with a liquid additive preparation B, in particular an aqueous additive solution B, in a mixing device, **characterized in that** the base polymer A is formed from monomers bearing at least 30% neutralized acid groups and the liquid additive preparation B, in particular the aqueous additive solution B, is dosed into the mixing device without nozzle via a pipe, wherein the liquid additive preparation B is formed by mixing a first liquid I, preferably an aqueous additive-containing solution I, preferably comprising at least one surface postcrosslinker, with at least one second liquid II, preferably an aqueous additive-containing solution II, preferably comprising a polyvalent cation, wherein the liquids I and II are fed separately to the pipe and are only combined and mixed in the pipe, so what emerges from the pipe is a mixture of liquids I and II as liquid additive preparation B, in particular aqueous additive solution B.

2. Process according to Claim 1, **characterized in that** further liquids, in particular aqueous solutions, are dosed via the pipe into the mixing device and onto the base polymer A, wherein these liquids are also fed separately into the pipe and are only combined in the pipe with liquids I and II or their mixture, so what emerges from the pipe is a mixture of all employed liquids as liquid additive preparation B, in particular aqueous additive solution B.

3. Process according to either of Claims 1 and 2, **characterized in that** liquids I and II and also any further liquids present are combined/mixed in the pipe via one or more T pieces or distributors to form the liquid additive preparation B, in particular the aqueous additive solution B.

4. Process according to any of Claims 1 to 3, **characterized in that** the internal diameter of the pipe is in the range of 1 - 50 mm, preferably 5 - 20 mm.

5. Process according to any of Claims 2 to 4, **characterized in that** the time span between combining the liquids to be added and the emergence of the mixture which is the liquid additive preparation B, in particular the aqueous additive solution B, from the pipe is less than 60 seconds, preferably less than 30 seconds, but especially at least 1 second.

6. Process according to any of Claims 1 to 5, **characterized in that** the base polymer A is a partially neutralized crosslinked polyacrylic acid.

7. Process according to Claim 6, **characterized in that** the admixture of liquid additive preparation B, in particular aqueous additive solution B, to the base polymer A is followed by thermal drying of the polymer, wherein a surface-postcrosslinking reaction takes place which may take place not only before but also during drying, wherein the preferred temperature range for surface postcrosslinking and drying ranges from ≥ 65°C to 200°C, in particular from 100 to 200°C and more preferably from 150 to 190°C.

8. Process according to any of Claims 1 to 5, **characterized in that** the base polymer A is a partially neutralized surface-postcrosslinked polyacrylic acid.

9. Process according to Claim 8, **characterized in that** as the liquid additive preparation B, in particular the aqueous additive solution B, is admixed to the base polymer A the surface-postcrosslinked polymer is being cooled, preferably to a temperature < 65°C, in particular < 50°C, and the moisture content of the polymer is being raised, preferably to 10% by weight, preferably adjusted to from 0.01 to 5% by weight and more preferably to from 0.1 to 3% by weight, as determined by Karl Fischer titration.

10. Process according to any of Claims 1 to 9, **characterized in that** at least 80% by weight of base polymer A has a particle size between 150 and 850 µm, in particular between 150 and 600 µm.

11. Process according to any of Claims 1 to 10, **characterized in that** the liquid additive preparation B, in particular the aqueous additive solution B, comprises such additive materials as alter the performance properties of base polymer A in a desired direction and/or facilitate its processability or endow the resultant chain growth polymer with an additional function, preferably selected from surface postcrosslinkers, metal salts, particularly comprising polyvalent cations, film-forming polymers, thermoplastic polymers, dendrimers, polycationic polymers (such as preferably polyvinylamine, polyethyleneimine or polyallylamine), water-insoluble polyvalent metal salts, such as preferably magnesium carbonate, magnesium oxide, magnesium hydroxide, calcium carbonate, calcium sulfate or calcium phosphate, water-soluble mono- or polyvalent metal salts, such as preferably aluminum sulfate, salts of sodium, of potassium, of zirconium or of iron, inorganic particles, such as preferably pyrogenous alumina, clay minerals, pyrogenous silica, colloidal silica sols, titanium dioxide, nonpyrogenous alumina and magnesia, alkali metal salts, such as preferably sodium sulfate, potassium sulfate, sodium lactate, potassium lactate, sodium citrate, potassium citrate, sodium sorbate and potassium sorbate, dustproofing agents, such as preferably polyethylene glycols having a molecular weight of for example 400 to 20 000 g/mol, polyglycerol, 3- to 100-tuply ethoxylated polyols, such as preferably trimethylolpropane, glycerol, sorbitol and neopentylglycol, odor control agents, e.g., zeolites, cyclodextrins, antimicrobial actives and/or scents.

12. Process according to any of Claims 1 to 11, **characterized in that** the path length from where the liquids to be added are combined to where the mixture which is the liquid additive preparation B, in particular the aqueous additive solution B, emerges from the pipe is less than 2 m, preferably less than 1 m.

13. Process according to any of Claims 1 to 12, **characterized in that** the liquid additive preparation B, in particular the aqueous additive solution B, has a water content of at least 50% by weight, advantageously at least 80% by weight and preferably at least 90% by weight.

## Revendications

1. Procédé pour la préparation de polymères absorbant l'eau, dans lequel on met en contact et mélange dans un dispositif de mélange un polymère de base A avec une composition liquide d'additifs B, en particulier une solution aqueuse d'additifs B, **caractérisé en ce que** le polymère de base A est à base de monomères portant des groupes acides neutralisés à raison d'au moins 30 % et on introduit par addition dosée dans le dispositif de mélange la composition liquide d'additifs B, en particulier la solution aqueuse d'additifs B, au moyen d'un tube sans buse, la composition liquide d'additifs B résultant du mélange d'un premier liquide I, de préférence d'une solution aqueuse I contenant des additifs, de préférence comprenant au moins un agent de post-réticulation superficielle, avec au moins un deuxième liquide II, de préférence une solution aqueuse II contenant des additifs, de préférence comprenant un cation polyvalent, les liquides I et II étant introduits séparément dans le tube et n'étant réunis et mélangés qu'une fois arrivés dans le tube, de sorte qu'il sort du tube un mélange des liquides I et II en tant que composition liquide d'additifs B, en particulier solution aqueuse d'additifs B.

2. Procédé selon la revendication 1, **caractérisé en ce qu'**on ajoute par addition dosée au polymère de base A d'autres liquides, en particulier des solutions aqueuses, par le tube dans le dispositif de mélange, ces liquides étant eux aussi introduits séparément dans le tube et n'étant réunis avec les liquides I et II ou leur mélange qu'une fois arrivés dans le tube, de sorte qu'il sort du tube un mélange de tous les liquides utilisés, en tant que composition liquide d'additifs B, en particulier solution aqueuse d'additifs B.

3. Procédé selon l'une quelconque des revendications 1 et 2, **caractérisé en ce que** les liquides I et II ainsi que les autres liquides éventuellement présents sont réunis et ainsi mélangés dans le tube au moyen d'une ou de plusieurs pièces en T ou d'un ou de plusieurs répartiteurs, et forment ainsi la composition liquide d'additifs B, en particulier la solution aqueuse d'additifs B.

4. Procédé selon l'une quelconque des revendications 1 à 3, **caractérisé en ce que** le diamètre interne du tube se situe dans la plage de 1 à 50 mm, de préférence de 5 à 20 mm.

5. Procédé selon l'une quelconque des revendications 2 à 4, **caractérisé en ce que** l'espace de temps entre la réunion des liquides à introduire et la sortie hors du tube du mélange, qui est la composition liquide d'additifs B, en particulier la solution aqueuse d'additifs B, est inférieur à 60 secondes, de préférence inférieur à 30 secondes, mais en particulier d'au moins 1 seconde.

6. Procédé selon l'une quelconque des revendications 1 à 5, **caractérisé en ce que** le polymère de base A est un poly(acide acrylique) réticulé, partiellement neutralisé.

7. Procédé selon la revendication 6, **caractérisé en ce qu'**à la suite de l'addition de la composition liquide d'additifs B, en particulier de la solution aqueuse d'additifs B, au polymère de base A, on soumet le polymère à un séchage thermique, tandis qu'a lieu une réaction de post-réticulation superficielle, qui peut avoir lieu aussi bien avant que pendant le séchage, la plage de température préférée lors de la post-réticulation superficielle et du séchage allant de ≥ 65 °C à 200 °C, en particulier de 100 à 200 °C, de façon particulièrement préférée de 150 à 190 °C.

8. Procédé selon l'une quelconque des revendications 1 à 5, **caractérisé en ce que** le polymère de base A est un poly(acide acrylique) post-réticulé en surface, partiellement neutralisé.

9. Procédé selon la revendication 8, **caractérisé en ce que** pendant l'addition de la composition liquide d'additifs B, en particulier de la solution aqueuse d'additifs B, au polymère de base A, on refroidit le polymère post-réticulé en surface, de préférence jusqu'à une température < 65 °C, en particulier < 50 °C, et la teneur en humidité du polymère est augmentée, de préférence jusqu'à 10 % en poids, de préférence 0,01 à 5 % en poids, de façon particulièrement préférée 0,1 à 3 % en poids, déterminée par titrage de Karl-Fischer.

10. Procédé selon l'une quelconque des revendications 1 à 9, **caractérisé en ce que** le copolymère de base A présente à raison d'au moins 80 % en poids une taille de grain comprise entre 150 et 850 µm, en particulier à raison d'au moins 80 % en poids une taille de grain comprise entre 150 et 600 µm.

11. Procédé selon l'une quelconque des revendications 1 à 10, **caractérisé en ce que** la composition liquide d'additifs B, en particulier la solution aqueuse d'additifs B, comprend des additifs qui modifient dans le sens souhaité les propriétés relatives à l'utilisation du polymère de base A et/ou accentuent son aptitude à la mise en oeuvre ou dotent le polymérisat résultant d'un effet supplémentaire, de préférence choisis parmi des agents de post-réticulation superficielle, des sels métalliques, comprenant en particulier des cations polyvalents, des polymères filmogènes, des polymères thermoplastiques, des dendrimères, des polymères polycationiques (tels que, de préférence, une polyvinylamine, polyéthylène-imine ou polyallylamine), des sels métalliques polyvalents insolubles dans l'eau, tels que de préférence le carbonate de magnésium, l'oxyde de magnésium, l'hydroxyde de magnésium, le carbonate de calcium, le sulfate de calcium ou le phosphate de calcium, des sels métalliques mono- ou polyvalents solubles dans l'eau, tels que de préférence le sulfate d'aluminium, des sels de sodium, potassium, zirconium ou fer, des particules inorganiques, telles que de préférence l'oxyde d'aluminium pyrogéné, des minéraux argileux, la silice pyrogénée, des sols de silice colloïdaux, le dioxyde de titane, l'oxyde d'aluminium non pyrogéné et l'oxyde de magnésium, des sels de métaux alcalins, tels que de préférence le sulfate de sodium ou de potassium, les lactates, citrates, sorbates de sodium ou de potassium, des agents dépoussiérants, tels que de préférence des polyéthylèneglycols ayant une masse moléculaire par exemple de 400 à 20 000 g/mole, le polyglycérol, des polyols 3 à 100 fois éthoxylés, tels que de préférence le triméthylolpropane, le glycérol, le sorbitol et le néopentylglycol, des désodorisants, comme par exemple des zéolithes, des cyclodextrines, des substances actives antimicrobiennes et/ou des parfums.

12. Procédé selon l'une quelconque des revendications 1 à 11, **caractérisé en ce que** la distance entre la réunion des liquides à introduire et la sortie du mélange, qui est la composition liquide d'additifs B, en particulier la solution aqueuse d'additifs B, hors du tube, est inférieure à 2 m, de préférence inférieure à 1 m.

13. Procédé selon l'une quelconque des revendications 1 à 12, **caractérisé en ce que** la composition liquide d'additifs B, en particulier la solution aqueuse d'additifs B, a une teneur en eau d'au moins 50 % en poids, avantageusement d'au moins 80 % en poids, de préférence d'au moins 90 % en poids.
